# EUROPEAN PATENT APPLICATION

(11) **EP 1 215 873 A1**
(43) Date of publication of application: **19.06.2002**
(21) Application number: 01302927.7
(22) Date of filing: 28.03.2001
(51) Int. Cl.: H04M 11/00, G08C 17/02

(54) **A method & system for remotely controlling an appliance**

(30) Priority: 18.12.2000 IN DE113800
(71) Applicant: Third Eye Control Solutions PVT. Ltd., New Delhi 110 065 (IN)
(72) Inventor: Shrivastava, Sonia Third Eye Control. Sol. PVT.Ltd, New Dehli 110065 (IN)
(74) Representative: Robson, Aidan John

(57) **Abstract**

This invention provides a method and system for remotely controlling an appliance within premises from any distance, having a base unit and multiple peripheral remote receiver units comprising:
- interface means for receiving signals over a telephone line,
- said interface means is connected to an interactive voice response system for obtaining user selections,
- said interactive voice response system is connected to authentication means for authenticating the password and identifying the choice made by the user,
- said authentication means is connected to a wireless means for communicating with said multiple peripheral remote receiver units,
- said wireless means is wirelessly connected to the multiple peripheral remote receivers which act as an interface between the appliance and power source for controlling the supply of power to the appliance.

## Description

### Field of the invention:

The present invention relates to a method and system for remotely controlling an appliance.

### Background of the invention:

The development of automation in remote control systems for appliances has raised two issues. First issue is the limited range of conventional hand held remotes. This is proposed to be overcome by sending choice of control signals to the telecontroller through the telephone line by making an ordinary telephone call and choosing from the options presented through an interactive voice response system. Second issue is the problem of communication of commands between the base unit and the various appliances/devices.

Several systems are in use, which have their own limitations. One of the simplest system is the use of cables as a transmission channel to send control signals between the base controller and the appliance. This requires the installation of cables and connecting the equipment to the control unit, which not only adds significantly to the inconvenience of moving equipment around, but also to the infrastructure costs, if the appliance and the control unit are not in immediate proximity but far removed spatially.

Another system is an Infra red system for remotely communicating which is a cheap and popular standard but it requires that the remote control and the device to be controlled have to be in line of sight of each other, and fails if there is any obstacle. Therefore this system can not work across walls and around obstacles like furniture etc.

There also exist widely known methods of communicating information and commands by carrier currents employing injection of the same onto the mains network. The control signals travel over the existing electrical wiring in the premises. Sometimes, the premises for the purpose of billing or load distribution have different set of wiring. For example a premises that has sublet smaller sections for say office space would typically have different meters installed for each section. If for example all air conditioners are to be switched off to conserve power after office hours, then one would need different control equipment for each of these sections since their wiring would be separate. Anyone who uses more than one of these units would either need to buy separate control devices for each such unit, or need to make alterations in the existing electrical wiring in order to use the same equipment, which is needless to say adds to inconvenience and cost.
The same goes for premises where different circuits are connected to different phases that are isolated from each other.

A drawback of this method is that devices that draw power not from mains but other sources like batteries, solar panels, etc cannot be controlled since they are not connected to the mains.

### The objects and summary of the invention:

The object of this invention is to obviate the above drawback and remotely control appliances within premises from many distance having a base unit and multiple peripheral units.

To achieve the said objective this invention provides a system for remotely controlling an appliance within a premises from any distance, having a base unit and multiple peripheral remote receiver units comprising:
- interface means for receiving signals over a telephone line.
- said interface means is connected to an interactive voice response system for obtaining user selections,
- said interactive voice response system is connected to authentication means for authenticating the password and identifying the choice made by the user,
- said authentication means is connected to a wireless means for communicating with said multiple peripheral remote receiver units,
- said wireless means is wirelessly connected to the multiple peripheral remote receivers which act as an interface between the appliance and power source for controlling the supply of power to the appliance.

The said interface means includes a ring detector circuit for identifying incoming telephone calls.

The said interactive voice response system includes a means for obtaining a password from and presenting interactive choices to the user.

The said authentication means is a microcontroller.

The said wireless means is a wireless transreceiver unit that transmits the instruction and receives the status.

The said interactive voice response system is a microcontroller means.

The said means for obtaining a password is a microcontroller means.

The said interactive voice response system means for obtaining password and authentication means are all implemented on a single microcontroller.

The base unit and the multiple receivers have a unique presettable primary address and secondary address to avoid any clash with another system.

A method for remotely controlling an appliance within a premises from any distance, having a base unit and multiple peripheral remote receiver units comprising:
- receiving signals over a telephone line,
- obtaining user selections for desired operations,
- authenticating a user password and identifying the choice made by the user, and
- communicating with said multiple peripheral remote receiver units wirelessly for controlling the supply of power appliance.

The said receiving of signals over a telephone line includes detecting an incoming ring signal.

The said obtaining user selections includes obtaining a password from and presenting interactive choices to the user.

Authenticating is done by validating received password against a value defined earlier.

The said communication includes transmission of instructions and reception of status.

The base unit and the multiple receivers use unique presettable primary address and secondary address.

### Brief Description of the drawings:

The invention will now be explained with reference to the accompanying drawings.
Figure 1 shows the basic layout of the telecontroller, according to this invention.
Figure 2 shows the peripheral remote control receiver unit(s).
Figure 3 shows a block diagram of the base unit voice response system.

### Detailed description of the drawings:

The remote appliance control receivers which receives the rf control signals from the base unit is interfaced between the appliance and the source of power which may be mains, a battery, solar panels or even any other unconventional source capable of providing electricity to the device, any device can be controlled irrespective of whether it is connected to the electrical wiring of the premises or not.

The cordless telephone is a known and fairly popular equipment used to have the convenience of communicating with the telephone line from any place within range of the base unit. The base unit is connected to the telephone line and communicates with it. The handset, which is not connected to the base unit by a cord, but by rf links, offers the convenience of being used from any location within range of the base unit. The signals including conversation are transmitted between the handset and the base unit. The present invention draws inspiration from this model to innovatively use it for a different purpose altogether by transmitting control signals instead of conversation between the base unit and the multiple receivers using rf links, which are further used to control devices connected to the receivers that are analogous to the handset.

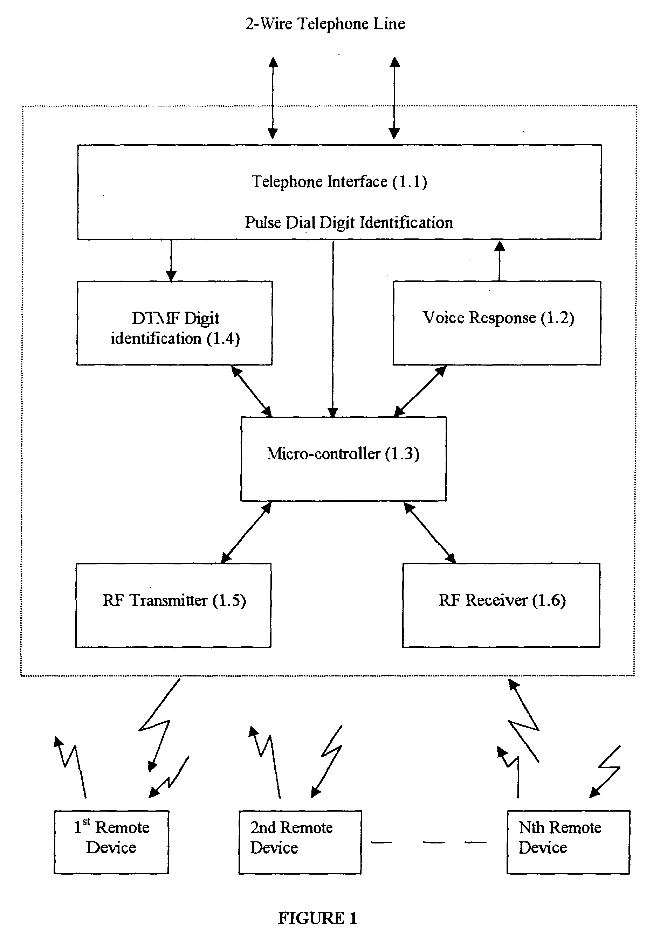

Figure 1 shows the basic layout of the telecontroller. The telecontroller device basically consists of a base unit BU interfaced with the telephone line through a telephone interface (1.1). When a caller makes a telephone call, the telephone interface used to connect to the phone line and responsive to a pre-determined number of rings allows the telecontroller to answer the call if it is not answered by anyone in the premises. The microcontroller (1.3) then presents the caller with the appropriate prompt phrase stored in the memory to prompt for a password. Only if the password is authentic, the caller is allowed further access, else he is disconnected.

Once the password is authenticated, the base unit voice response (1.2) further presents the menu of possible actions to the caller who indicates his choice by dialing the appropriate digit. The base microcontroller (1.3) identifies the choice made through the DTMF identification (1.4) and rf transmitter (1.5) of the base unit transmits the control signal which is received by the multiple remote receivers. The rf receiver (1.5) of the base unit receives status and response signals transmitted by the remote receivers and conveys the same to the microcontroller (1.3), which can initiate further action for example conveying the response back to the caller using the appropriate phrase by the voice response unit (1.2).

Since rf links send control signals received from any distance using a telephone line, the equipment to be controlled can be placed anywhere with respect to the base unit, without requiring any additional wiring or changing the existing one, and can be any distance away from the calling party who is making the control call through a telephone line.

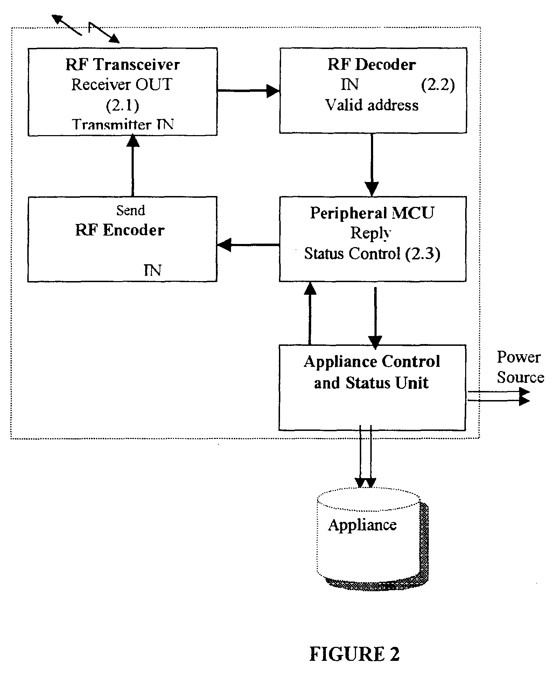

Figure 2 shows the peripheral remote control receiver unit. The rf transceiver (2.1) receives the control signal transmitted by the base unit. The decoder (2.2) decodes the address and if the signal is meant for that particular receiver, the remote microcontroller unit (2.3) takes over and executes the desired action that may be switching on/off the device by activating a relay that makes/breaks contact with the power source, transmitting the status or response to the base unit by the transceiver (2.1), or any other action as directed by the control signal. The remote receiver unit is physically interfaced between the appliance to be controlled and the power source that may be mains, a battery, a solar panel or any other unconventional source capable of providing power to the appliance/device. Thus any device irrespective of its physical placement or connection to the electrical wiring may be controlled.

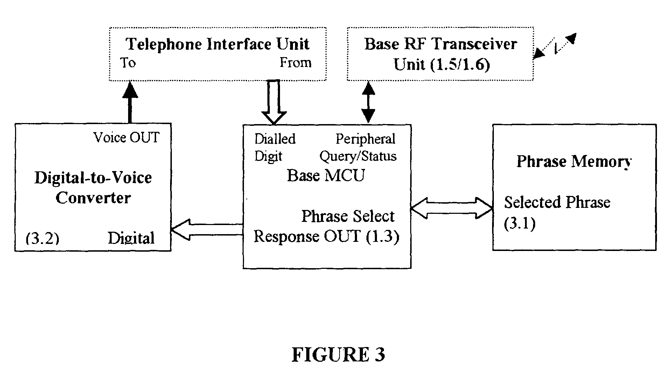

Figure 3 shows the base unit voice response system. The base microcontroller unit MCU presents the appropriate phrase from the phrase memory (3.1) to the caller through digital-to-voice converter (3.2). In response to the dialed digit signifying the choice selected by the caller, the appropriate control signal is transmitted to the remote receivers by the base rf transceiver unit (1.5. 1.6). The base unit as well as the multiple receivers have a unique resettable primary address that can be set or changed by the usr / owner. The various devices i.e. the multiple receiver and one base unit would have a secondary address that can be left pre-programmed. In this manner, all devices in various premises would each have a unique composite address so as to avoid any address clash with another system within range of neighboring premises where it may be in use.

## Claims

1. A system for remotely controlling an appliance within a premises from any distance, having a base unit and multiple peripheral remote receiver units comprising:
- interface means for receiving signals over a telephone line,
- said interface means is connected to an interactive voice response system for obtaining user selections,
- said interactive voice response system is connected to authentication means for authenticating the password and identifying the choice made by the user.
- said authentication means is connected to a wireless means for communicating with said multiple peripheral remote receiver units,
- said wireless means is wirelessly connected to the multiple peripheral remote receivers which act as an interface between the appliance and power source for controlling the supply of power to the appliance.

2. The system as claimed in claim 1 wherein said interface means includes a ring detector circuit for identifying incoming telephone calls.

3. The system as claimed in claim 1 wherein said interactive voice response system includes a means for obtaining a password from and presenting interactive choices to the user.

4. The system as claimed in claim 1 wherein said authentication means is a microcontroller.

5. The system as claimed in claim 1 wherein said wireless means is a wireless transreceiver unit that transmits the instruction and receives the status.

6. The system as claimed in claim 1 wherein said interactive voice response system is a microcontroller means.

7. The system as claimed in claim 3 wherein said means for obtaining a password is a microcontroller means.

8. The system as claimed in claim 1 wherein said interactive voice response system means for obtaining password and authentication means are all implemented on a single microcontroller.

9. The system as claimed in claim 1 wherein the base unit and the multiple receivers have a unique presettable primary address and secondary address to avoid any clash with another system.

10. A method for remotely controlling an appliance within a premises from any distance, having a base unit and multiple peripheral remote receiver units comprising:
- receiving signals over a telephone line,
- obtaining user selections for desired operations,
- authenticating a user password and identifying the choice made by the user, and
- communicating with said multiple peripheral remote receiver units wirelessly for controlling the supply of power appliance.

11. The method as claimed in claim 10 wherein said receiving of signals over a telephone line includes detecting an incoming ring signal.

12. The method as claimed in claim 10 wherein said obtaining user selections includes obtaining a password from and presenting interactive choices to the user.

13. The method as claimed in claim 10 wherein authenticating is done by validating received password against a value defined earlier.

14. The method as claimed in claim 10 wherein said communication includes transmission of instructions and reception of status.

15. The method as claimed in claim 10 wherein the base unit and the multiple receivers use unique presettable primary address and secondary address.
